# NEUE EUROPÄISCHE PATENTSCHRIFT

(11) **EP 1 407 948 B2**
(45) Veröffentlichungstag und Bekanntmachung des Hinweises auf die Entscheidung über den Einspruch: **12.08.2015**
(45) Hinweis auf die Patenterteilung: 15.03.2006
(21) Anmeldenummer: 03017716.6
(22) Anmeldetag: 02.08.2003
(51) Int. Cl.: B60T 8/00

(54) **Verfahren zur Steuerung der Bremsanlage eines Fahrzeugzuges**
Braking system control method for a tractor-trailer combination
Procéde'de contrôle d'un système de freinage pour un ensemble tracteur-remorque

(30) Priorität: 12.10.2002 DE 10247722
(43) Veröffentlichungstag der Anmeldung: 14.04.2004
(73) Patentinhaber: WABCO GmbH, 30453 Hannover (DE)
(72) Erfinder: Lenz, Thomas, 31275 Lehrte (DE); Meyer, Benno, 31542 Bad Nenndorf (DE); Ruhnau, Gerhard, 31535 Neustadt (DE)

(56) Entgegenhaltungen:
- EP-A- 0 387 004
- WO-A1-03/022650
- DE-A1- 19 515 061
- DE-A1- 19 963 747
- DE-A1- 19 964 164
- DE-C- 4 429 231
- US-A- 3 909 075
- US-A- 5 141 292
- US-B1- 6 273 522
- Technical Customer Information "Electronic Stability Program (ESP) for "Commercial Vehicles" Y486 K00 028, Knorr Bremse Systeme für Nutzfahrzeuge GmbH

## Beschreibung

Die Erfindung betrifft ein Verfahren zur Steuerung der Bremsanlage eines Fahrzeugzuges gemäß dem Oberbegriff des Patentanspruchs 1.

Ein gattungsgemäßes Verfahren ist aus der US5141292 A sowie aus der DE 101 28 6 92 A1 bekannt.

Das bekannte Verfahren dient dazu, ein Überschlagen bzw. Umkippen eines aus Zugfahrzeug und Anhängefahrzeug bestehenden Fahrzeugzuges, dort als Lastzug bezeichnet, bei Kurvenfahrt zu vermeiden. Hierfür wird der Fahrzeugzug durch automatische Betätigung der Bremsanlage bei Erreichen einer bestimmten, relativ hohen Querbeschleunigung abgebremst, d. h. Zugfahrzeug und Anhängefahrzeug werden jeweils gebremst. Beim Befahren einer Fahrbahn mit relativ geringem Reibwert kann dabei ein Blockieren von Rädern auftreten, was zu einer unerwünschten Reduzierung der Seitenführungskraft der Räder und infolgedessen zu einem Schleudern des Fahrzeugzuges führen kann. Sofern der Fahrzeugzug mit einem Antiblokkiersystem ausgerüstet ist, verhindert die Blockierschutzfunktion des Antiblockiersystems das Blockieren der Räder und erhält somit die Seitenführungskraft.

In der Praxis kommt es vor, daß ein Zugfahrzeug, das mit einem Antiblockiersystem ausgestattet ist, mit einem Anhängefahrzeug gekoppelt wird, das kein Antiblokkiersystem aufweist. In einem solchen Fall kann bei der automatischen Einbremsung des Anhängefahrzeugs das erwähnte Blockieren der Räder auftreten, was zu einem sicherheitskritischen Fahrzustand führen kann. Bei dem eingangs genannten bekannten Verfahren wird zur Vermeidung solcher sicherheitskritischen Fahrzustände die Bremsanlage des Anhängefahrzeugs generell intermittierend betätigt. Hierbei bleiben die realen äußeren Bedingungen, wie z. B. der aktuell vorliegende Reibwert der Fahrbahn, außer Betracht. Insbesondere auf einer Fahrbahn mit relativ hohem Reibwert wird dann nicht die physikalisch mögliche Bremswirkung des Anhängefahrzeugs ausgenutzt, d. h. die Maßnahmen zur Verhinderung des Überschlagens des Fahrzeugzuges können nicht optimal durchgeführt werden.

Der Erfindung liegt daher die Aufgabe zugrunde, ein Verfahren zur Steuerung der Bremsanlage eines Fahrzeugzuges anzugeben, bei der die Einbremsung des Anhängefahrzeuges unter besserer Ausnutzung der Gegebenheiten der Fahrbahn erfolgt.

Diese Aufgabe wird durch die in dem Patentanspruch 1 genannte Erfindung gelöst.

Die Erfindung hat den Vorteil, mit einfachen Mitteln in einer Steuereinrichtung für ein Antiblockiersystem, d. h. in dessen elektronischen Steuergerät, vorgesehen werden zu können. Hierfür ist eine Erweiterung des in dem Steuergerät eingespeicherten Programmalgorithmus notwendig. Weiterer Aufwand, insbesondere apparativer Art wie z. B. Sensoren oder Aktuatoren, ist nicht erforderlich. Die Erfindung kann daher sehr kostengünstig realisiert werden.

Die Erfindung wird nachfolgend unter Nennung weiterer Vorteile anhand eines Ausführungsbeispiels unter Verwendung von Zeichnungen näher erläutert.

Es zeigen
- Fig. 1: eine Draufsicht auf einen Fahrzeugzug und
- Fig. 2: eine vorteilhafte Ausgestaltung des erfindungsgemäßen Verfahrens in Flußdiagrammdarstellung.

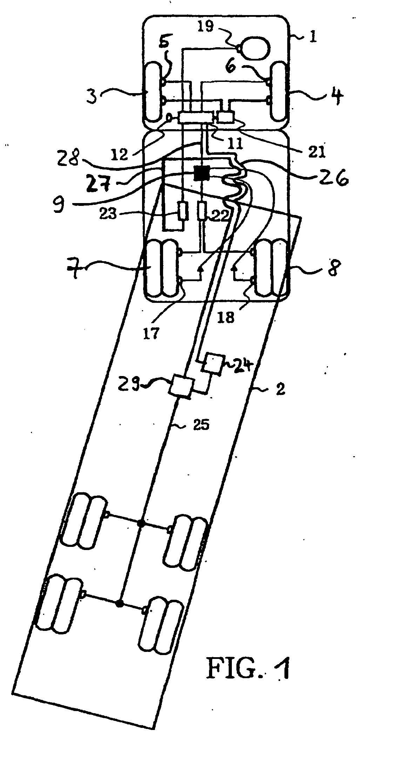

In der Fig. 1 ist ein Fahrzeugzug mit einem Zugfahrzeug (1) dargestellt, an das ein Anhängefahrzeug (2) angekoppelt ist. Das Zugfahrzeug weist eine lenkbare Vorderachse, welcher Räder (3, 4) zugeordnet sind, sowie eine Hinterachse, welcher Räder (7, 8) zugeordnet sind, auf. Die Räder (3, 4, 7, 8) sind über den Rädern zugeordnete Radbremsen mit Bremskraft beaufschlagbar. Nachfolgend sei angenommen, das Fahrzeug sei mit einer Druckmittelbremsanlage mit elektrischer Steuerung versehen, wie z.B. einer Bremsanlage mit einem Anitblokkiersystem (ABS) oder einem elektrisch gesteuertem Bremssystem (EBS). Die Erfindung ist jedoch auch vorteilhaft bei Bremsanlagen anderen Typs einsetzbar, z.B. bei rein elektromechanisch betätigbareh Bremsen.

In dem Zugfahrzeug (1) ist eine Steuereinrichtung (11) vorgesehen, die zur Steuerung verschiedener Bremsfunktionen an der Vorderachse des Zugfahrzeugs (1) dient. Die Steuereinrichtung (11) kann z.B. als elektronisches ABS- oder EBS-Steuergerät ausgebildet sein. Hierfür ist die Steuereinrichtung (11) über eine elektrische Leitung mit einer Ventileinrichtung (21) verbunden, mittels der der Bremsdruck in den Radbremsen der Räder (3, 4) steuerbar ist. Zur Steuerung der Radbremsen der der Hinterachse zugeordneten Rädern (7, 8) ist ein Steuermodul (9) vorgesehen. Das Steuermodul (9) ist über eine elektrische Leitung mit einer weiteren Ventileinrichtung (22) verbunden, über die der Bremsdruck in den Radbremsen der Räder (7, 8) steuerbar ist. Das Steuermodul (9) ist über eine Datenleitung (28) mit der Steuereinrichtung (11) zum Datenaustausch verbunden.

Das Steuermodul (9) empfängt über elektrische Leitungen Drehzahlsignale von an den Rädern (7,8) angeordneten Drehzahlsensoren (17, 18), mittels derer die Drehgeschwindigkeiten der Hinterräder (7, 8) bestimmbar sind. Die Steuereinrichtung (11) ist mit Drehzahlsensoren (5, 6), mittels derer die Drehgeschwindigkeiten der Vorderräder (3, 4) bestimmbar sind, über elektrische Leitungen verbunden. Die Steuereinrichtung (11) empfängt über die Datenleitung (28) von der weiteren Steuereinrichtung (9) Signale, die die Drehgeschwindigkeiten der Hinterräder (7, 8) des Zugfahrzeugs (1) repräsentieren.

Des weiteren kann an die Steuereinrichtung (11) über elektrische Leitungen ein Lenkwinkelsensor (19) sowie ein Querbeschleunigungssensor (12) angeschlossen sein. Unter Verwendung der zuvor genannten Signale, insbesondere Querbeschleunigung, Drehgeschwindigkeiten und Lenkwinkel, ist die Steuereinrichtung (11) in der Lage, eine mögliche Kippgefahr des Fahrzeugzuges (1, 2) zu bestimmen.

Das Anhängefahrzeug (2) weist ebenfalls eine druckmittelbetätigbare Bremsanlage auf, die über eine Bremsleitung (25) betätigbar ist. Als Einrichtung (23) zur Steuerung der Einbremsung des Anhängefahrzeugs (2) ist ein in dem Zugfahrzeug (1) angeordnetes Anhängersteuerventil (23) vorgesehen, mittels dessen die Bremsdruckleitung (25) über eine Bremsdruckleitung (27) mit Bremsdruck beaufschlagbar ist. Das Anhängersteuerventil (23) ist über eine elektrische Leitung an die Steuereinrichtung (11) angeschlossen. Mittels des Anhängersteuerventils (23) kann die Steuereinrichtung (11) den Bremsdruck in dem Anhängefahrzeug (2) steuern. Das Anhängersteuerventil (23) ist vorzugsweise vom Ein-/AusTyp, d. h. es kann nur entweder der Bremsdruck eingesteuert werden oder wieder entlüftet werden. Eine Funktion bzw. Schaltstellung zum Halten des Bremsdrucks ist aus Kostengründen nicht vorgesehen.

Des weiteren ist in dem Anhängefahrzeug (2) eine Einrichtung (24) vorgesehen, welche eine Blockierschutzfunktion für das Anhängefahrzeug (2) ausübt, z. B. ein Antiblockiersystem. Das Antiblockiersystem (24) ist mittels einer Ventileinrichtung (29) in der Lage, den über die Bremsdruckleitung (25) dem Anhängefahrzeug zugeführten Bremsdruck zu modulieren, d.h. im Falle von Blockiergefahr zu reduzieren. Das Antiblockiersystem (24) ist über eine Datenschnittstelle (26) sowie elektrische Leitungen mit der Steuereinrichtung (11) in dem Zugfahrzeug (1) verbunden. Über die Datenschnittstelle (26) gibt das Antiblockiersystem (24) ein Signal an die Steuereinrichtung (11) aus, welches die Funktionstüchtigkeit der Blockierschutzfunktion in dem Anhängefahrzeug (1) anzeigt. Die Datenschnittstelle (26) kann z. B. als PLC-Schnittstelle (Power Line Carrier) ausgebildet sein.

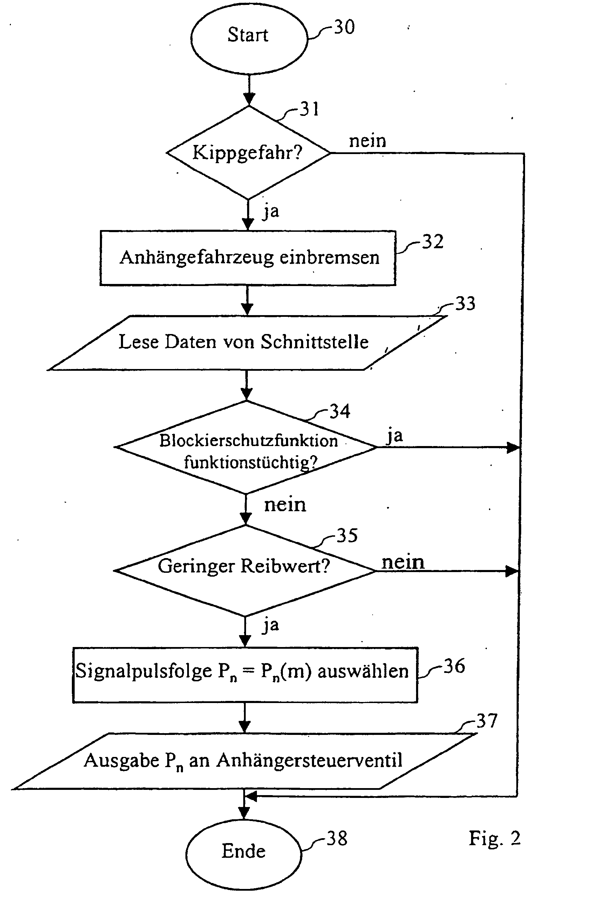

Die Steuereinrichtung (11) führt eine Reihe von Steueralgorithmen aus, beispielsweise Blockierschutzfunktion für die Vorderachse des Zugfahrzeugs (1), elektronische Bremskraftverteilung zwischen Vorder- und Hinterachse des Zugfahrzeugs (1), Bremsbelag-Verschleißoptimierung zwischen Vorder- und Hinterachse des Zugfahrzeugs (1) sowie ein Verfahren zur Vermeidung des Umkippens des Fahrzeugzuges (1, 2). Anhand der Fig. 2 wird nachfolgend ein Teil dieses Verfahrens zur Vermeidung des Umkippens erläutert, welcher dazu dient, sicherheitskritische Fahrzustände des Fahrzeugzuges (1, 2) infolge eines Blockierens der Räder des Anhängefahrzeuges (2) zu vermeiden.

Das Verfahren gemäß Fig. 2 beginnt mit einem Block (30). In einem darauffolgenden Verzweigungsblock (31) wird anhand vorgegebener Algorithmen geprüft, ob eine Kippgefahr vorliegt. Hierfür wird beispielsweise die von dem Querbeschleunigungssensor (12) gemessene Querbeschleunigung auf über Überschreitung eines höchstzulässigen Wertes geprüft. Eine Überschreitung dieses höchstzulässigen Wertes deutet dann auf eine Kippgefahr hin. Je nach Sensorbestückung des Fahrzeuges kann die Querbeschleunigung auch aus den Drehgeschwindigkeiten der Räder (3, 4, 7, 8), vorzugsweise der Vorderräder (3, 4), oder aus dem Signal des Lenkwinkelsensors (19), in Verbindung mit der Fahrzeuggeschwindigkeit, berechnet werden. In der Praxis werden zur Sicherheit aus den Signalen verschiedener Sensoren, soweit vorgesehen, Querbeschleunigungs-Signale ermittelt und auf Plausibilität zueinander geprüft. Das Signal, das die Kippgefahr anzeigt, kann jedoch auch auf geeignete andere Art ermittelt werden, beispielsweise aus den Radlasten, die aus den in Luftfederbälgen vorliegenden Druckwerten bestimmt werden können.

Sofern in dem Verzweigungsblock (31) keine Kippgefahr ermittelt wurde, wird direkt zu dem Block (38) verzweigt, mit dem das Verfahren gemäß Fig. 2 endet. Anderenfalls wird zu einem Block (32) verzweigt. Mit dem Block (32) wird das Anhängefahrzeug (2) durch Betätigung des Anhängersteuerventils (23) eingebremst. Sodann wird ein Datentransferblock (33) ausgeführt.
Dort werden Daten von der Schnittstelle (26) eingelesen, insbesondere die von dem Antiblockiersystem (24) übermittelte Information über die Funktionstüchtigkeit der Blockierschutzfunktion. Daraufhin wird in einem Verzweigungsblock (34) geprüft, ob die Blockierschutzfunktion in dem Anhängefahrzeug (2) funktionstüchtig ist. Falls diese Bedingung erfüllt ist, wird zu dem Block (38) verzweigt, womit das Verfahren gemäß Fig. 2 endet. Weitere Aktivitäten zur Verhinderung eines Blokkierens der Räder des Anhängefahrzeugs sind in diesem Falle nicht notwendig.

Sofern in dem Verzweigungsblock (34) festgestellt wird, daß die Blockierschutzfunktion in dem Anhängefahrzeug . (2) nicht funktionstüchtig ist, oder wenn gar kein Antiblockiersystem in dem Anhängefahrzeug (2) vorhanden ist, wird zu einem Verzweigungsblock (35) verzweigt. Dort wird geprüft, ob ein unterhalb eines vorgegebenen Mindestwerts liegender Reibwert zwischen dem Fahrzeugzug (1, 2) und der Fahrbahn, d. h. zwischen den Reifen des Fahrzeugzuges (1, 2) und der Fahrbahn, vorliegt. Diese Überprüfung erfolgt dadurch, daß überprüft wird, ob die Blockierschutzfunktion in dem Zugfahrzeug (1) anspricht. Es wird geprüft, ob die Blockierschutzfunktion an dem kurvenäußeren Rad der Hinterachse des Zugfahrzeugs (1) anspricht, im in der Fig. 1 dargestellten Fall einer Linkskurve also, ob die Blockierschutzfunktion des Rades (8) anspricht. Zusätzlich können auch die kurveninneren Räder (3, 7) des Zugfahrzeuges (1) auf Ansprechen der Blockierschutzfunktion überwacht werden. Eine Blockierneigung bzw. ein entsprechender Schlupf an diesen Rädern (3, 7) kann als Maß für die Radlastverlagerung von der kurveninneren Seite des Zugfahrzeuges (1) auf die kurvenäußere Seite und damit für die Kipptendenz des Zugfahrzeuges (I) herangezogen werden.

Eine weitere nicht erfindungsgemäße Möglichkeit, den geringen Reibwert zu delektieren, besteht darin, die gemessene Gesamtverzögerung des Fahrzeugzuges (1, 2) bei der automatischen Einbremsung zu ermitteln und mit einem aufgrund der Betätigung der Bremsanlage erwarteten Wert zu vergleichen. Falls die gemessene Gesamtverzögerung diesen erwarteten Wert nicht erreicht, d. h. also kleiner ist, kann auf einen geringen Reibwert geschlossen werden. Alternativ, jedoch nicht erfindungsgemäß kann diese Überprüfung auch bei einer von dem Fahrer ausgelösten Bremsung bei bestimmtem Radschlupf durchgeführt werden.

Sofern in dem Verzweigungsblock (35) festgestellt wird, daß ein geringer Reibwert nicht vorliegt, wird wiederum zu dem erwähnten Block (38) verzweigt, mit dem das Verfahren gemäß Fig. 2 endet. Anderenfalls wird zu einem Block (36) verzweigt, in welchem eine Signalpulsfolge (Pₙ) zur Ansteuerung des Anhängersteuerventils (23) aus einer vorbestimmten Menge von Signalpulsfolgen (Pₙ(m, a_{q}) ) ausgewählt. Die Signalpulsfolge (Pₙ) gibt an, in welchem Zeitraster die Steuereinrichtung (11) das Anhängersteuerventil (23) einschalten soll und damit das Anhängefahrzeug (2) einbremsen soll bzw. in welchen Zeiträumen keine Einbremsung stattfinden soll. Durch eine entsprechende Verteilung der Einschalt- und Ausschaltzeiten des Anhängersteuerventils (23) kann ein gewünschter mittlerer Bremsdruck für das Anhängefahrzeug (2) eingestellt werden. Die Signalpulsfolge (Pₙ) wird beispielsweise in Abhängigkeit von einer in der Steuereinrichtung (11) eingespeicherten oder berechneten Masse des Fahrzeugzuges (1, 2) ausgewählt. Ein weiterer Parameter für die Auswahl ist beispielsweise die mittels des Querbeschleunigungssensors (12) ermittelte Querbeschleunigung (a_{q}) des Fahrzeugzuges (1, 2). Die Auswahl der anzuwendenden Signalpulsfolge (Pₙ) kann z. B. gemäß folgender Tabelle erfolgen:

| | a_{q} > a_{q1} | a_{q} > aq₂ | a_{q} > a_{q3} |
|---|---|---|---|
| m < 24 t | P_{n1,1} | P_{n1,2} | P_{n1,3} |
| 24 t < m < 30 t | P_{n2,1} | P_{n2,2} | P_{n2,3} |
| m > 30 t | P_{n3,1} | P_{n3,2} | P_{n3,3} |

Hierbei stellt m die Masse des Fahrzeugzuges (1, 2) dar, die gemäß der Tabelle in die Gruppen "kleiner als 24 Tonnen" (m < 24 t), "zwischen 24 und 30 Tonnen" (24 t < m < 30 t) und "größer als 30 Tonnen" (m > 30 t) eingeteilt werden. Die Querbeschleunigung (a_{q}) wird in drei Gruppen eingeteilt, nämlich a_{q} > a_{q1}, a_{q} > a_{q2} und a_{q} > a_{q3}. Hierbei gilt a_{q1} < a_{q2} < a_{q3} .

Eine weitere vorteilhafte Möglichkeit, die Signalpulsfolge (Pₙ) festzulegen, besteht darin, eine stetig verlaufende Kennliinie, z.B. einen Polygonzug, zu verwenden, mittels der die Einschalt- und Ausschaltzeiten des Anhängersteuerventils. (23) abhängig von der ermittelten Fahrzeugmasse bestimmt werden. Auf diese Weise kann eine weiter verbesserte Abstimmung der Einschalt- und Ausschaltzeiten auf die jeweilige Beladung erzielt werden.

In einem darauffolgenden Datentransferblock (37) wird die Signalpulsfolge (Pₙ) an das Anhängersteuerventil (23) ausgegeben. Hiernach endet das Verfahren in dem Block (38).

## Patentansprüche

1. Verfahren zur Steuerung der Bremsanlage eines Fahrzeugzuges (1, 2), bestehend aus Zugfahrzeug (1) und Anhängefahrzeug (2), wobei eine in dem Zugfahrzeug (1) angeordnete Steuereinrichtung (11) eine automatische Einbremsung des Anhängefahrzeugs (2) veranlassen kann, **dadurch gekennzeichnet, dass** die Stärke der Einbremsung des Anhängefahrzeugs (2) durch die Steuereinrichtung (11) reduzierbar ist, wenn ein unterhalb eines vorgegebenen Mindestwerts liegender Reibwert zwischen dem Fahrzeugzug (1, 2) oder Teilen davon und der Fahrbahn detektiert wird, wobei ein Ansprechen einer Blockierschutzfunktion in dem Zugfahrzeug (1) als Kriterium verwendet wird, dass ein unterhalb des vorgegebenen Mindestwerts liegender Reibwert vorliegt, wobei ein Ansprechen der Blockierschutzfunktion an dem kurvenäusseren Rad (8) der Hinterachse des Zugfahrzeugs (1) als Kriterium verwendet wird, dass ein unterhalb des vorgegebenen Mindestwerts liegender Reibwert vorliegt.

## Claims

1. Method of controlling the braking system of a vehicle train (1, 2) consisting of a towing vehicle (1) and a trailer vehicle (2), a control device (11) arranged in the towing vehicle (1) being capable of bringing about automatic braking of the trailer vehicle (2), **characterised in that** the intensity of the braking of the trailer vehicle (2) can be reduced by the control device (11) if a value of friction between the vehicle train (1, 2) or parts thereof and the road surface that is below a prespecified minimum value is detected, wherein triggering of a locking protection function in the towing vehicle (1) is used as a criterion that a value of friction below the prespecified minimum value is present, and wherein triggering of the locking protection function at that wheel (8) of the rear axle of the towing vehicle (1) which is on the outside of a curve is used as a criterion that a value of friction below the prespecified minimum value is present.

## Revendications

1. Procédé pour commander l'installation de freinage d'un train routier (1, 2) constitué par un véhicule tracteur (1) et un véhicule formant remorque (2), selon lequel un dispositif de commande (1) disposé dans le véhicule tracteur (1) peut déclencher un freinage automatique du véhicule formant remorque (2), **caractérisé en ce que** l'intensité du freinage du véhicule formant remorque (2) peut être réduite par le dispositif de commande (11) lorsqu'un coefficient de frottement inférieur à une valeur minimale prédéterminée, entre le train routier (1, 2) ou des parties de ce dernier et la chaussée est détecté, selon lequel on utilise une réponse d'une fonction de protection d'antiblocage dans le véhicule tracteur (1) comme critère du fait qu'on est en présence d'un coefficient de frottement inférieur à la valeur minimale prédéterminée, selon lequel on utilise une réponse de la fonction d'antiblocage au niveau d'une roue (8), située à l'extérieur de la courbe, de l'essieu arrière du véhicule tracteur (1) comme critère du fait qu'on est en présence d'un coefficient de frottement inférieur à la valeur minimale prédéterminée.
